# FASCICULE DE BREVET EUROPEEN

(11) **EP 0 604 265 B1**
(45) Date de publication et mention de la délivrance du brevet: **18.09.1996**
(21) Numéro de dépôt: 93402990.1
(22) Date de dépôt: 10.12.1993
(51) Int. Cl.: G21C 13/036, G21C 1/09

(54) **Buse de remplacement et procédé de remplacement d'une buse dans une enceinte sous pression**
Ersatzdüse und Verfahren zum Austausch einer Düse in einem Druckbehälter
Replacement nozzle and method for replacing a nozzle in a pressure vessel

(30) Priorité: 21.12.1992 US 993536
(43) Date de publication de la demande: 29.06.1994
(73) Titulaire: FRAMATOME, 92084 Paris-la-Défense (FR)
(72) Inventeur: Gehnke, Harold William, Lynchburg, VA 24502 (US); Dixon, Larry Deon, Forest, Virginia (US); Bottoms, Richard Thomas, Lynchburg, VA 24501 (US)
(74) Mandataire: Armengaud Ainé, Alain

(56) Documents cités:
- EP-A- 0 161 815
- EP-A- 0 440 353
- US-A- 4 440 339
- US-A- 5 149 490
- PATENT ABSTRACTS OF JAPAN, vol. 14, no. 552 (M-1056)7 Décembre 1990 & JP-A-02 235 594
- PATENT ABSTRACTS OF JAPAN, vol. 14, no. 450 (M-1030)27 Septembre 1990 & JP-A-02 179 382
- PATENT ABSTRACTS OF JAPAN, vol. 14, no. 443 (C-0762) 21 Septembre 1990 & JP-A-02 173 217
- PATENT ABSTRACTS OF JAPAN, vol. 14, no. 532 (M-1051) 22 Novembre 1990 & JP-A-02 224 890

## Description

### ARRIERE-PLAN DE L'INVENTION

### 1. Domaine de l'Invention

La présente invention concerne, de façon générale, les cuves sous pression et en particulier un procédé de remplacement des buses d'injection dans des cuves sous pression .

### 2. Arrière-Plan général

Les composants des cuves sous pression tels que les dispositifs de pressurisation d'un système nucléaire de vapeur comportent des buses d'injection qui subissent une défaillance du matériau due aux fissures de corrosion sous contraintes. Ceci est la conséquence de la sensibilité du matériau, des contraintes élevées, et d'un fonctionnement dans un environnement caustique. Lorsqu'une buse d'injection présente des fissures ou qu'il y a des fuites autour de la buse, il faut la réparer ou la remplacer.

Un procédé de remplacement actuellement utilisé dont les demandeurs ont connaissance consiste à découper la buse d'injection existante au niveau de l'enveloppe de la cuve sous pression et à percer la partie restante de la buse à l'intérieur de la paroi de la cuve. Une préparation de soudure à canal en J est alors broyée dans la soudure de structure d'origine restante tout en s'assurant qu'une certaine quantité minimale de revêtement de matériau de jonction reste au fond du canal. Ceci est nécessaire pour éviter de souder trop près des matériaux de base ce qui exigerait alors un traitement thermique après soudure selon les exigences de la norme ASME. Ceci est évité parce qu'un traitement thermique de soudure d'une partie d'un dispositif de pressurisation dans cette situation n'est pas pratique. La surface de préparation de la soudure et approximativement 1,27 cm (un demi pouce ou inch) au-delà de la préparation de soudure sur les surfaces adjacentes doivent alors être examinés par pénétration de colorant. Un petit vide qui est inhérent au procédé de soudure utilisé pour déposer la soudure de structure d'origine requiert une quantité excessive de meulage pour obtenir des surfaces propres qui soient convenables pour la soudure. Le procédé de meulage doit être réalisé par une personne travaillant à l'intérieur de la cuve sous pression dans un environnement hautement radioactif et inconfortable. Le procédé aboutit à des retards de programme, à l'exposition du personnel à la radioactivité , et à un risque quant à l'achèvement réussi du travail .

Les brevets dont les Demandeurs ont connaissance qui concernent le remplacement des manchons ou des buses incluent ce qui suit.

Le Brevet U.S-A- 4 440 339 décrit un procédé de réparation de l'enveloppe d'un mécanisme de commande. L'enveloppe est découpée au niveau d'un point entre le joint de soudure avec le manchon et la surface intérieure de l'enceinte du réacteur. La partie inférieure de l'enveloppe est enlevée et une nouvelle enveloppe est insérée dans le manchon et soudée à la partie restante de l'enveloppe.

La demande EP-A-0 161 815 correspondant au brevet U.S A 4 615 477 décrit un procédé pour remplacer des tubes dans un tambour ou une canalisation sans enlever tout le tube. L'ancien tube est découpé de niveau avec la canalisation et un évidement est usiné dans la canalisation pour créer une embase pour le nouveau tube. Le vieux tube restant est chanfreiné et soudé à la canalisation au niveau du chanfrein et un nouveau tube est inséré dans l'embase et soudé à l'extérieur de la canalisation.

La demande EP-A-0 440 353 correspondant aux brevets U.S. A 5 094 801 et US.A.5 091 140 décrivent un appareil et un procédé pour remplacer un manchon d'élément chauffant dans un dispositif de pressurisation d'un système de refroidissement d'un réacteur nucléaire. L'élément chauffant original et la buse d'injection sont enlevés et le trou agrandi. Un manchon extérieur est installé dans le trou sur le même centrage que le manchon d'origine. Un manchon intérieur est ensuite installé dans le manchon extérieur pour maintenir l'alignement de l'élément chauffant d'origine.

On peut également faire référence, au titre de l'état de la technique, au document "Patent Abstracts of Japan" vol. 14 n° 552, M-1056, 07.12.1990 & JP-A-02 235 594 (ISHI KAWAJIMY HARIMA Heavy Ind.) du 18.09.1990.

Le problème associé à la région de vide qui subsiste après qu'une buse d'injection a été enlevée n'est pas convenablement abordé par la technique connue quant au temps requis pour achever la réparation et à l'exposition du personnel.

### RESUME DE L'INVENTION

L'invention concerne une cuve sous pression comportant une buse d'injection d'origine ou existante qui a été retirée pour faire place à une buse de remplacement, une zone de préparation de soudure ultérieure étant usinée dans la soudure d'origine, un trou de la buse d'injection laissé vacant étant partiellement élargi de l'intérieur de la cuve sous pression pour former un logement cylindrique, caractérisée en ce que ladite buse de remplacement comprend :
a. un manchon d'appui qui est reçu dans le logement élargi du trou, ledit manchon d'appui étant soudé à l'intérieur de la cuve sous pression ; et
b. la buse d'injection de remplacement est reçue à travers ledit manchon d'appui et le trou.

L'invention concerne également un procédé pour remplacer une buse d'injection qui s'étend dans une cuve sous pression à travers un trou dans la paroi de la cuve sous pression, caractérisé en ce qu'il consiste à :
a. retirer la buse d'injection d'origine ou existante ;
b. usiner une zone de préparation de soudure ultérieure dans la soudure d'origine restante ;
c. percer partiellement à travers un trou de la buse d'injection laissé vacant à partir de l'intérieur de la cuve sous pression pour former un logement cylindrique ; et
d. installer une buse d'injection de remplacement dans le trou et un manchon d'appui à souder dans le logement par soudage à partir de l'intérieur de la cuve sous pression.

### BREVE DESCRIPTION DES DESSINS

Pour une compréhension plus grande de la nature et des buts de la présente invention, référence sera faite à la description suivante, prise en relation avec les dessins annexés dans lesquels les mêmes parties portent les mêmes numéros de référence, et dans lesquels :
La Figure 1 est une vue en coupe qui illustre une buse d'injection d'origine dans une cuve sous pression;
La Figure 2 est une vue agrandie de la zone de soudure 20 de la Figure 1.
La Figure 3 illustre l'invention dans sa position de mise en place.

### DESCRIPTION DETAILLEE DU MODE PREFERE DE REALISATION DE L'INVENTION

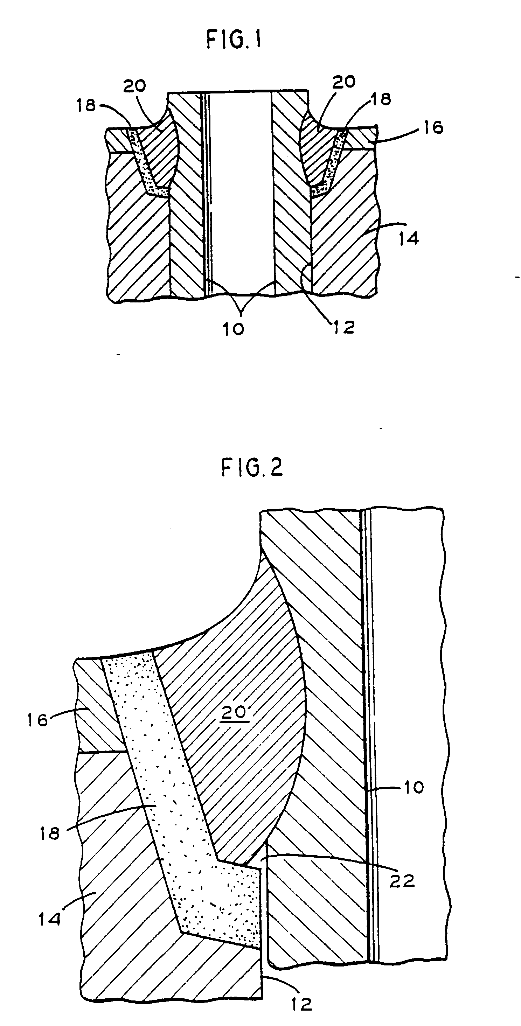

La Figure 1 illustre une buse d'injection d'origine 10 comme elle apparait installée à travers un trou 12 dans la paroi 14 d'une cuve sous pression. Le gainage 16 est formé d'un matériau résistant à la corrosion tel que de l'acier inoxydable et est prévu sur la surface intérieure de la paroi 14. Le matériau de jonction 18 est fourni sous forme d'un dépôt sur la paroi 14 et le gainage 16 pour empêcher d'avoir besoin d'un traitement thermique du métal de soudure et du métal de base après achèvement du processus de soudage . Une soudure 20 maintient la buse d'injection d'origine 10 dans sa position de mise en place. Comme on le voit dans la vue agrandie de la Figure 2, il y a un espace 22 entre la buse d'injection d'origine 10 et la soudure 20 qui est inhérent à l'installation de la buse d'origine 10. L'espace 22 s'étend au-delà du trou 12. Pendant le remplacement de la buse d'injection , il est requis que de tels espaces qui piègent un colorant PT pendant l'observation soient éliminés. Des procédures antérieures exigeant un meulage excessif pour obtenir une surface de soudage convenable ont abouti à une exposition aux radiations et à une durée d'immobilisation de l'installation accrue.

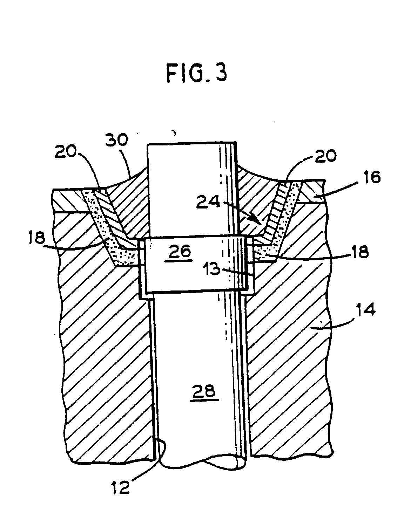

La buse de remplacement et le procédé de l'invention éliminent la perte de temps due au meulage précédemment requis. La buse d'origine 10 est enlevée en la découpant au niveau de l'extérieur de la paroi 14. La partie restante de la buse d'origine 10 est enlevée en utilisant un procédé d'usinage adéquat tel que le perçage. Une préparation de soudure sous forme d'un canal en J 24 est ensuite usinée dans la soudure d'origine comme vu à la Figure 3. Le trou 12 est alors percé en partie à partir de l'intérieur de la cuve sous pression pour fournir un logement cylindrique 13 adjacente à la surface intérieure de la paroi 14. Le manchon d'appui à souder 26 est dimensionné de façon telle que son diamètre extérieur s'ajuste étroitement au diamètre du logement cylindrique 13 et soit facilement reçu dans le logement cylindrique 13. Le diamètre intérieur du manchon d'appui à souder 26 est dimensionné pour recevoir la buse de remplacement 26. Une fois dans leur position de mise en place, le manchon d'appui à souder 26 et la buse de remplacement 28 sont soudés sur place comme indiqué par la soudure de remplacement 30. Le manchon d'appui de soudure 26 et la buse de remplacement 28 peuvent être des pièces solidaires ou séparées. Si le manchon d'appui de soudure 26 et la buse de remplacement 28 sont en pièces séparées, alors elles sont soudées ensemble en utilisant une soudure 30.

Parce ce que de nombreux modes de réalisation différents et variés peuvent être réalisés dans le domaine du concept de l'invention ici rapporté et parce que de nombreuses modifications peuvent être faites dans le mode de réalisation ici détaillé en conformité avec l'exigence descriptive de la loi, il doit être compris que les détails donnés ici doivent être ici interprétés comme illustratifs et non avoir un sens limitatif.

## Revendications

1. Cuve (14) sous pression comportant une buse d'injection d'origine ou existante qui a été retirée pour faire place à une buse de remplacement (28), une zone de préparation de soudure ultérieure étant usinée dans la soudure d'origine, un trou (12) de la buse d'injection laissé vacant étant partiellement élargi de l'intérieur de la cuve sous pression pour former un logement cylindrique (13), caractérisée en ce que ladite buse de remplacement comprend :
a. un manchon d'appui (26) qui est reçu dans le logement (13) élargi du trou (12), ledit manchon d'appui (26) étant soudé à l'intérieur de la cuve sous pression ; et
b. la buse d'injection de remplacement (28) est reçue à travers ledit manchon d'appui (26) et le trou (12).

2. Buse d'injection de remplacement (28) selon la revendication 1, caractérisée en ce qu'elle est solidaire du manchon (26).

3. Buse d'injection de remplacement selon la revendication 1, caractérisée en ce qu'elle est soudée audit manchon (26).

4. Procédé pour remplacer une buse d'injection qui s'étend dans une cuve (14) sous pression à travers un trou (12) dans la paroi de la cuve sous pression, caractérisé en ce qu'il consiste à :
a. retirer la buse d'injection d'origine ou existante ;
b. usiner une zone de préparation de soudure ultérieure dans la soudure d'origine restante ;
c. percer partiellement à travers un trou (12) de la buse d'injection laissé vacant à partir de l'intérieur de la cuve sous pression pour former un logement cylindrique (13) ; et
d. installer une buse d'injection de remplacement (28) dans le trou (12) et un manchon d'appui (26) à souder dans le logement (13) par soudage à partir de l'intérieur de la cuve sous pression.

## Patentansprüche

1. Druckbehälter (14) mit einer Original- bzw. existierenden Einspritzdüse, die entfernt wurde, um einer Austauschdüse (28) Platz zu machen, wobei ein Bereich zur Vorbereitung einer späteren Verschweißung in die ursprüngliche Verschweißung eingearbeitet wurde und eine Öffnung (12) der Einspritzdüse, welche freigelassen worden ist teilweise vom Inneren des Druckbehälters aus, der vergrößert wurde, um ein Zylinderlager (13) zu bilden,
**dadurch gekennzeichnet,** daß
die Austauschdüse aufweist:
a. eine Andruckmanschette (26), die in dem erweiterten Lager (13) der Öffnung (12) aufgenommen ist, wobei die Andruckmanschette (26) am Inneren des Druckbehälters verschweißt ist, und dadurch daß
b. die Austauscheinspritzdüse (28) durch die Andruckmanschette und die Öffnung (12) aufgenommen ist.

2. Austauscheinspritzdüse (28) nach Anspruch 1, dadurch gekennzeichnet, daß sie mit der Manschette (26) fest verbunden ist.

3. Austauscheinspritzdüse nach Anspruch 1, dadurch gekennzeichnet, daß sie mit der Manschette (26) verschweißt ist.

4. Verfahren zum Austauschen einer Einspritzdüse, die sich in einem Druckbehälter (14) durch eine Öffnung (12) in der Wand des Druckbehälters erstreckt, dadurch gekennzeichnet, daß es aus folgenden Schritten besteht:
a. Entfernen der ursprünglich existierenden Einspritzdüse;
b. Ausarbeiten eines Vorbereitungsbereichs für eine spätere Verschweißung aus der verbleibenden ursprünglichen Verschweißung;
c. teilweises Aufbohren der Öffnung (12) der Einspritzdüse, die freigelassen ist vom Inneren des Druckbehälters aus, um ein zylinderförmiges Lager (13) zu bilden; und
d. Einbau einer Austauscheinspritzdüse (28) in die Öffnung (12) und einer Andruckmanschette (26), die in dem Lager (13) vom Inneren des Druckbehälters her verschweißt wird.

## Claims

1. Pressure tank (14) comprising an original or existing injection nozzle, which has been removed to install a replacement nozzle (28), a preparation zone for subsequent welding being machined in the original weld, a hole (12) of the injection nozzle left empty being partially enlarged from the inside of the pressure tank to form a cylindrical groove (13), characterised in that the said replacement nozzle comprises:
a. a support sleeve (26) which is accommodated in the enlarged groove (13) of the hole (12), said support sleeve (26) being welded to the inside of the pressure tank and
b. the replacement injection nozzle (28) is passed through said support sleeve (26) and hole (12).

2. Replacement injection nozzle (28) according to claim 1, characterised in that it is integral with the sleeve (26).

3. Replacement injection nozzle according to claim 1, characterised in that it is welded to said sleeve (26).

4. Method for replacing an injection nozzle which extends into a pressure tank (14) through a hole (12) in the wall of the pressure tank, characterised in that it comprises:
a. removing the original or existing injection nozzle;
b. machining a preparation zone for subsequent welding in the original weld;
c. partially penetrating a hole (12) of the injection nozzle left empty from the inside of the pressure tank to form a cylindrical groove (13); and
d. installing a replacement injection nozzle (28) in the hole (12) and a support sleeve (26) to be welded into the groove (13) from the inside of the pressure tank.
